# EUROPEAN PATENT APPLICATION

(11) **EP 4 845 289 A1**
(43) Date of publication of application: **25.11.2026**
(21) Application number: 24918827.7
(22) Date of filing: 16.01.2024
(51) Int. Cl.: H04W 74/0833, H04W 72/0446, H04W 72/0453

(54) **TERMINAL AND COMMUNICATION METHOD**

(71) Applicant: NTT DOCOMO, INC., Tokyo 100-6150 (JP)
(72) Inventor: SHICHIJO, Taichi, Tokyo 100-6150 (JP); HARADA, Hiroki, Tokyo 100-6150 (JP)
(74) Representative: Hoffmann Eitle
(86) International application number: PCT/JP2024/001024
(87) International publication number: WO 2025/154181

(57) **Abstract**

A terminal includes: a reception unit configured to receive, from a base station, configuration information for configuring random access channel occasions used for random access channel transmission; and a control unit configured to configure random access channel occasions based on the configuration information. The configuration information includes a plurality of random access channel occasion patterns, and each of the plurality of random access channel occasion patterns includes at least one of: an identifier identifying a random access channel occasion; information indicating the number of synchronization signal blocks associated with the random access channel occasion; or information indicating the number of random access channel occasions allocated in a frequency domain.

## Description

### TECHNICAL FIELD

The present invention relates to a terminal and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In addition, in the 3GPP (registered trademark) Release 18, the importance of network energy savings has increased in order to achieve environmental sustainability, carbon neutrality, SDGs (Sustainable Development Goals), reduction of operating costs, and the like, and energy saving methods are being discussed (For example, Non-Patent Literature 2).

In order to reduce network energy consumption, a method of dynamically configuring RACH (Random Access Channel) occasions in the NES (Network energy savings) mode has been discussed so that the network reception module (for example, user equipment (UE)) can be caused to sleep in a fine-grained and flexible manner.

### CITATION LIST

### Non-Patent Literature

Non-Patent Literature 1: 3GPP TS 38.300 V18.0.0 (2023-12)
Non-Patent Literature 2: "New WID: Network energy savings for NR", RP-223540, 3GPP TSG RAN Meeting #98-e, December 2022
Non-Patent Literature 3: 3GPP TR 38.822 V17.1.0 (2023-06)
Non-Patent Literature 4: 3GPP TS 38.331 V17.6.0 (2023-09)

### SUMMARY OF INVENTION

### TECHNICAL PROBLEM

However, the conventional RACH occasion configuration is limited to one type and the periodicity equal to or greater than a certain value cannot be configured. Furthermore, how to configure RACH occasion configuration in order to achieve dynamic adaptation of RACH occasions has been unclear.

### SOLUTION TO PROBLEM

A terminal according to an embodiment of the present invention includes: a reception unit configured to receive, from a base station, configuration information for configuring random access channel occasions used for random access channel transmission; and a control unit configured to configure random access channel occasions based on the configuration information. The configuration information includes a plurality of random access channel occasion patterns, and each of the plurality of random access channel occasion patterns includes at least one of: an identifier identifying a random access channel occasion; information indicating the number of synchronization signal blocks associated with the random access channel occasion; or information indicating the number of random access channel occasions allocated in a frequency domain.

### ADVANTAGEOUS EFFECTS OF INVENTION

According to an embodiment of the present invention, configuration of RACH occasions can be flexibly configured in the wireless communication system.

### BRIEF DESCRIPTION OF DRAWINGS

[Fig. 1] is a drawing for describing a wireless communication system related to an embodiment of the present invention.
[Fig. 2] is a drawing illustrating an example of an initial access procedure between the UE and the gNB.
[Fig. 3] is a drawing illustrating an example of a structure of SSBs in NR.
[Fig. 4A] is a drawing for describing the RACH occasion (RO) configuration.
[Fig. 4B] is a drawing for describing the RO configuration.
[Fig. 5A] is a drawing illustrating an example of information elements of RACH-ConfigCommon included in SIB1.
[Fig. 5B] is a drawing illustrating an example of information elements of RACH-ConfigGeneric included in SIB1.
[Fig. 5C] is a drawing illustrating an example of the conventional RO configuration.
[Fig. 5D] is a drawing illustrating an example of the conventional RO configuration.
[Fig. 6] is a sequence diagram illustrating an example of a procedure between the terminal and the base station in the first embodiment.
[Fig. 7] is a drawing illustrating an example of parameters included in SIB1 in the first embodiment.

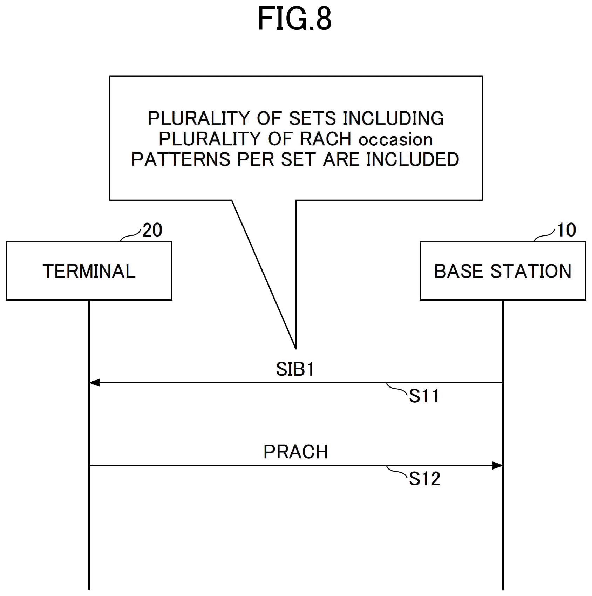

[Fig. 8] is a sequence diagram illustrating an example of a procedure between the terminal and the base station in the second embodiment.
[Fig. 9] is a drawing illustrating an example of information included in RO patterns in the third embodiment.
[Fig. 10] is a sequence diagram illustrating an example of a procedure between the terminal and the base station in the fifth embodiment.
[Fig. 11] is a drawing illustrating an example of a functional structure of a base station related to an embodiment of the present invention.
[Fig. 12] is a drawing illustrating an example of a functional structure of a terminal related to an embodiment of the present invention.
[Fig. 13] is a drawing illustrating an example of a hardware structure of the base station or the terminal related to an embodiment of the present invention.
[Fig. 14] is a drawing illustrating an example of a structure of a vehicle related to an embodiment of the present invention.

### DESCRIPTION OF EMBODIMENTS

Hereinafter, one or more embodiments of the present invention will be described by referring to the drawings. It should be noted that one or more embodiments described below are examples. Embodiments of the present invention are not limited to the following embodiments.

In an operation of a wireless communication system according to an embodiment of the present invention, the conventional techniques will be used as necessary. The conventional techniques include, for example, the conventional NR or LTE, but are not limited to the conventional NR or LTE. Further, it is assumed that the term "LTE" used in the present specification has, unless otherwise specifically mentioned, a broad meaning including a scheme of LTE-Advanced and a scheme after LTE-Advanced (e.g., NR).

In the embodiments described below, terms that are used in the conventional LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

In addition, in an embodiment of the present invention, the expression, a radio parameter is "configured" may mean that a predetermined value is pre-configured, or may mean that a radio parameter indicated by a base station or a terminal is configured.

### (System configuration)

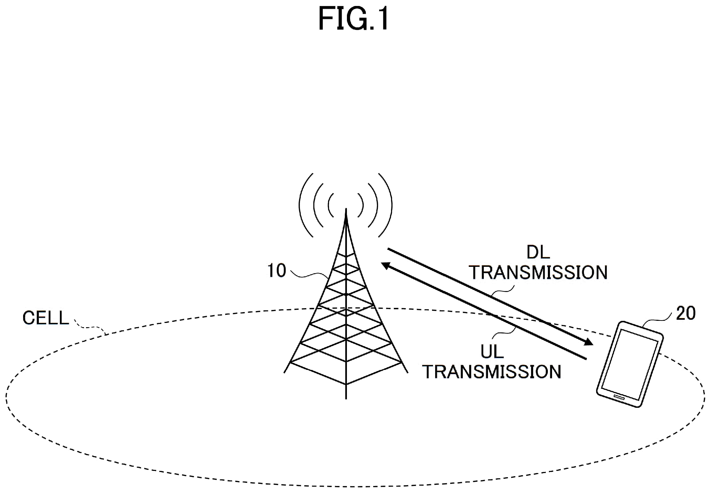

Fig. 1 is a drawing for describing a wireless communication system related to an embodiment of the present invention. As illustrated in Fig. 1, a wireless communication system related to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. It is to be noted that the terminal 20 may be referred to as a UE, and the base station 10 may be referred to as a gNB.

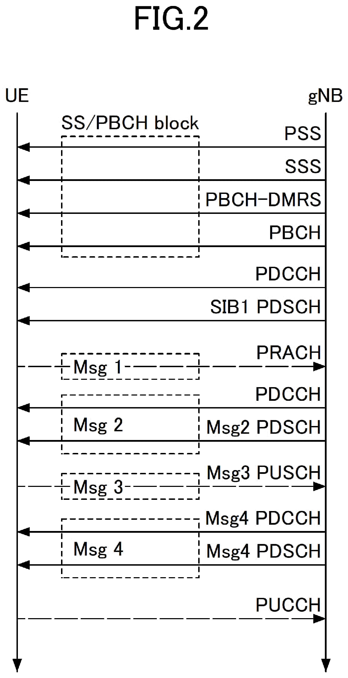

Fig. 2 is a drawing illustrating an example of an initial access procedure between the UE and the gNB. The following steps are performed in the initial access procedure.
1) PSS detection
   Time and frequency synchronization, Part of physical cell ID
2) SSS detection
   Part of physical cell ID
3) PBCH-DMRS detection
   (Part of) SSB index within 5 ms half radio frame
4) PBCH reading
   SFN number and radio frame timing (SSB index)
   Configuration information for RMSI reading
   Whether UE can camp on the cell (carrier) or not
5) PDCCH reception -> SIB1 PDSCH
   Information of cell configuration and initial access (e.g. PRACH configuration)
6) PRACH (Msg1) transmission
   First transmit signal for initial access procedure
7) Reception of PDCCH -> Msg2 PDSCH (RAR: Random access response)
   TA (timing advance), TC-RNTI and Msg3 scheduling (RAR UL grant)
8) Msg3 PUSCH transmission
   RRC setup request (including UE ID)
9) PDCCH reception -> Msg4 PDCSH
   Contention resolution: TC-RNTI -> C-RNTI

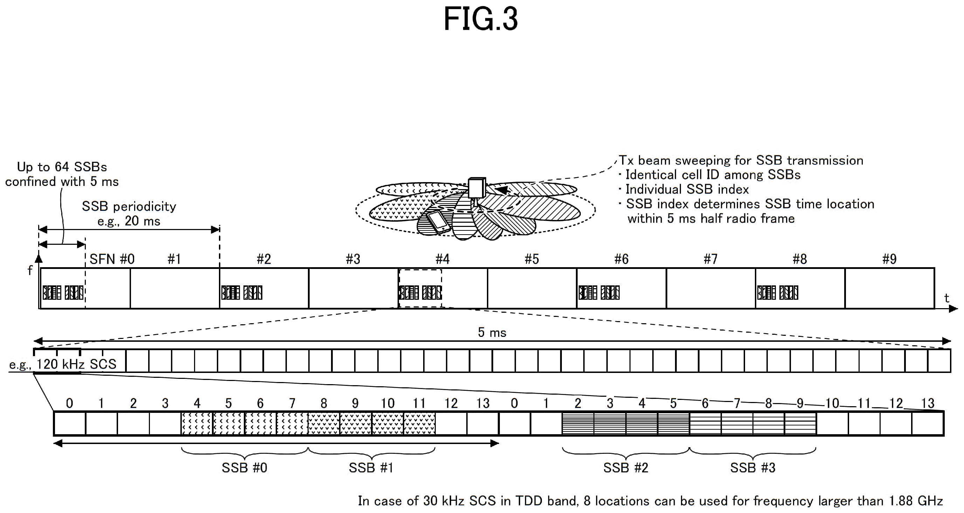

Fig. 3 is a drawing illustrating an example of a structure of SSBs in NR. An SSB is an example of a synchronization signal block.

The bandwidth of an SSB is 20 RBs and the number of symbols is 4. The bandwidth of an LTE SS/PBCH is 6 RBs and the number of symbols is 6. As described above, the bandwidth of an SSB is wider than that of an LTE SS/PBCH, and the number of symbols of an SSB is less than that of an LTE SS/PBCH.

The transmission period of LTE SS/PBCH is fixedly configured to be 5 or 10 ms. On the other hand, the transmission period of SSB can be flexibly configured from 5 ms, 10 ms, 20 ms, 40 ms, 80 ms, or 160 ms.

The symbol position of LTE SS/PBCH is fixed to a single position. On the other hand, SSB symbols are located at a plurality of candidate symbols within a 5 ms half radio frame. Symbol positions of SSB are positions fixed to 4/8/64 for each of the frequency ranges of 0-3/3-6/6-52.6 GHz.

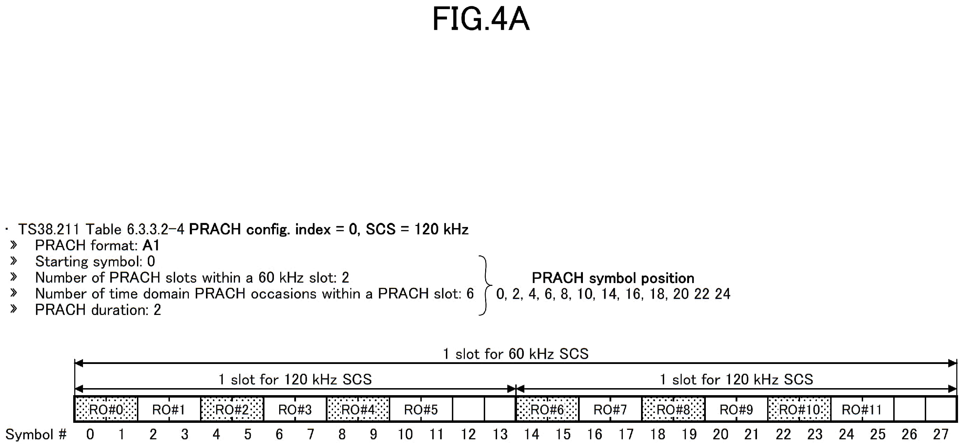

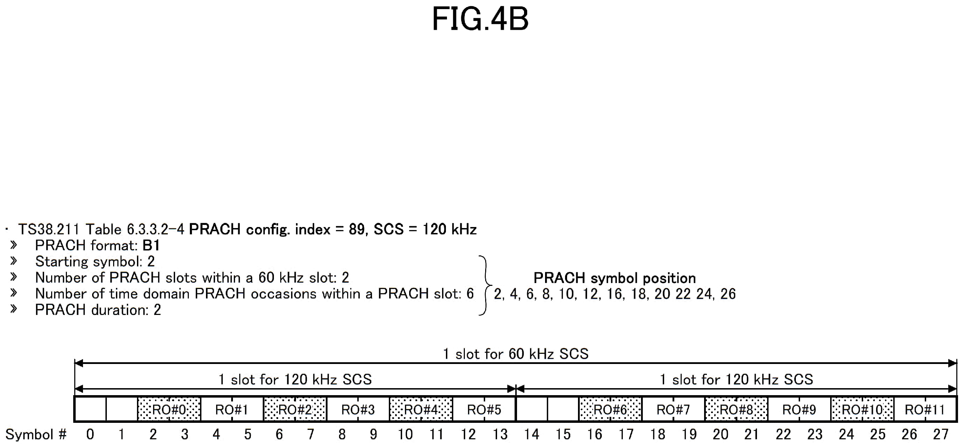

Fig. 4A is a drawing illustrating an example of a PRACH occasion configuration in a case where PRACH config.index is 0. Fig. 4B is a drawing illustrating an example of a PRACH occasion configuration in a case where PRACH config.index is 89.

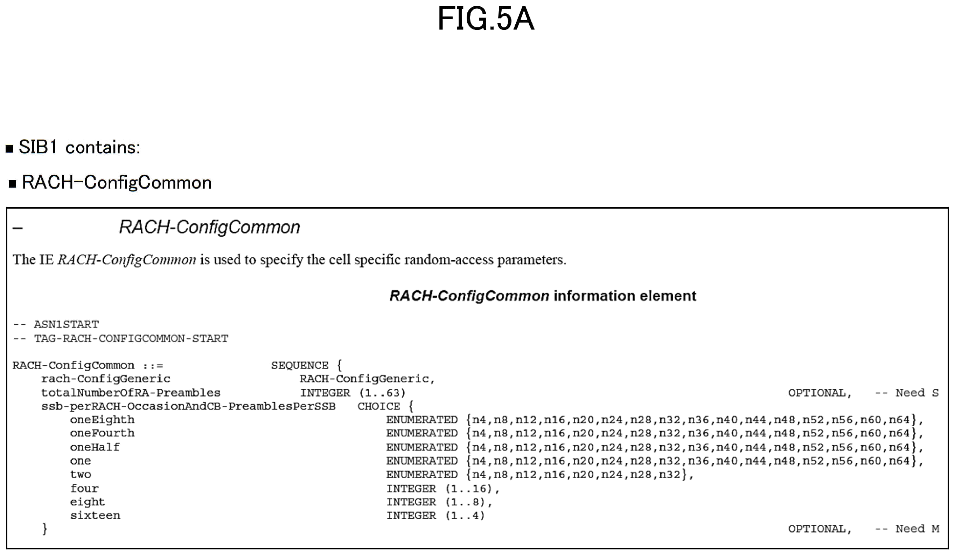

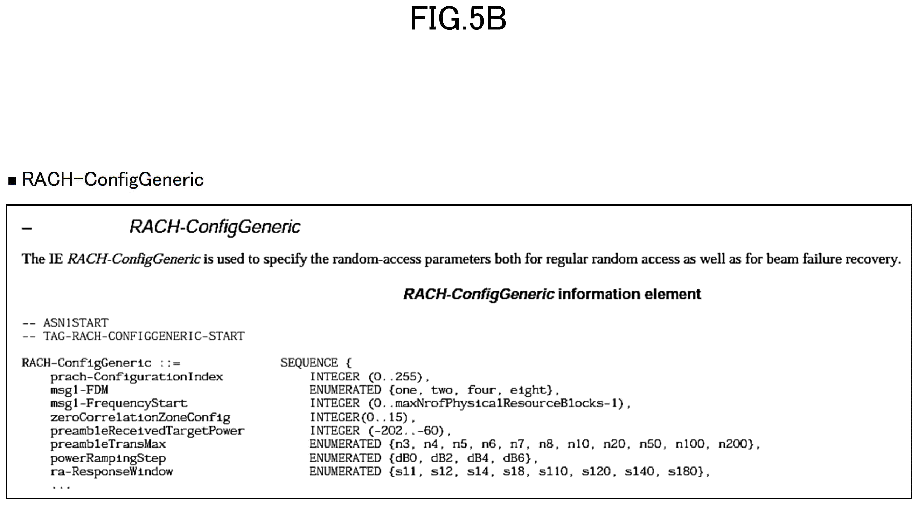

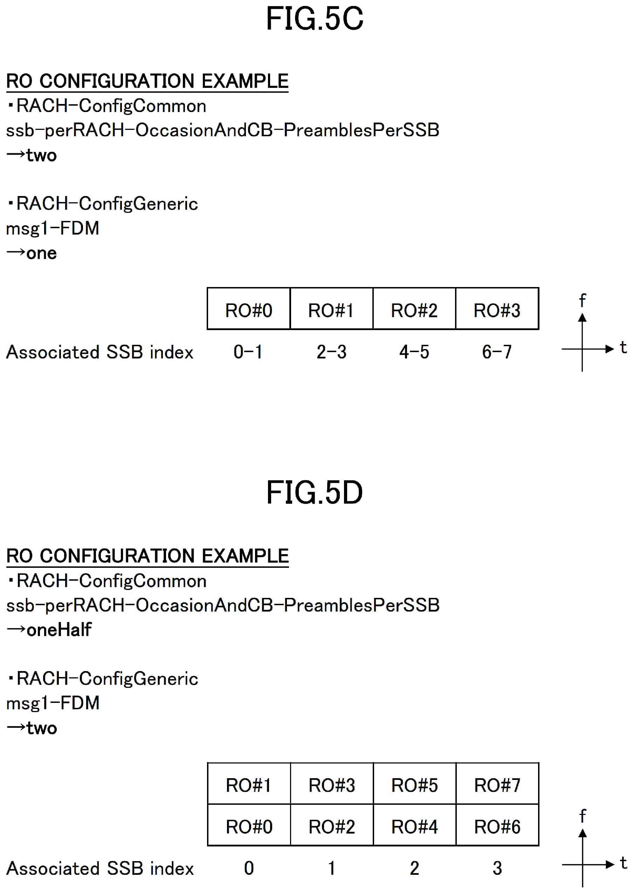

Association between SSB indexes and RACH occasions (ROs) (SSB index-RACH occasion association) is configured by using RRC parameters included in SIB1. Fig. 5A is a drawing illustrating an example of information elements of RACH-ConfigCommon included in SIB1. Fig. 5B is a drawing illustrating an example of information elements of RACH-ConfigGeneric included in SIB1. Fig. 5C and Fig. 5D are drawings illustrating an example of RO configurations.

The "ssb-perRACH-OccasionAndCB-PreamblesPerSSB" included in RACH-ConfigCommon illustrated in Fig. 5A indicates the number of SSBs associated with one RO and the number of preamble indexes associated with one SSB.

The "msg1-FDM" included in RACH-ConfigGeneric illustrated in Fig. 5B indicates the number of ROs allocated in the frequency domain (that is, the same position in the time domain).

Fig. 5C illustrates an RO configuration example in which "two" is configured in ssb-perRACH-OccasionAndCB-PreamblesPerSSB of RACH-ConfigCommon and "one" is configured in msg1-FDM of RACH-ConfigGeneric. In the example illustrated in Fig. 5C, two SSBs are associated with each RO and one RO is allocated in the frequency domain.

Fig. 5D illustrates an RO configuration example in which "oneHalf" is configured in ssb-perRACH-OccasionAndCB-PreamblesPerSSB of RACH-ConfigCommon and "two" is configured in msg1-FDM of RACH-ConfigGeneric. In the example illustrated in Fig. 5D, 0.5 (one half) SSBs are associated with each RO and two ROs are allocated in the frequency domain.

In order to reduce network energy consumption, a method of dynamically configuring ROs in the NES mode has been discussed so that the network reception module (for example, UE) can be caused to sleep in a fine-grained and flexible manner.

The conventional RO configuration is configured by using RRC parameters included in SIB1 and the parameter that can configure RO configurations is limited to one type and the periodicity equal to or greater than a certain value cannot be configured. In order to update these parameters, contents of SIB1 are required to be changed and there may be a case in which RRCReconfiguration for RRC-connected UEs is required in order to indicate the change.

Furthermore, how to configure RO configuration in order to achieve dynamic adaptation of ROs has been unclear.

According to an embodiment of the present invention, RO configuration can be flexibly and appropriately configured by taking into account the dynamic adaptation of ROs.

Each of the embodiments described below may be independently performed or may be performed by being combined with one of the embodiments.

### (First embodiment)

According to the first embodiment, a plurality of RO patterns may be configured as a new SIB1 parameter. A plurality of RO patterns in the first embodiment may be configured for NES or for terminals that support NES.

An RO pattern includes, for example, an RO identifier, information indicating the number of SSBs that are associated with one RO (for example, RACH-ConfigCommon) and/or information indicating the number of ROs that are allocated in the frequency domain (that is, at the same position in the time domain) (for example, RACH-ConfigGeneric).

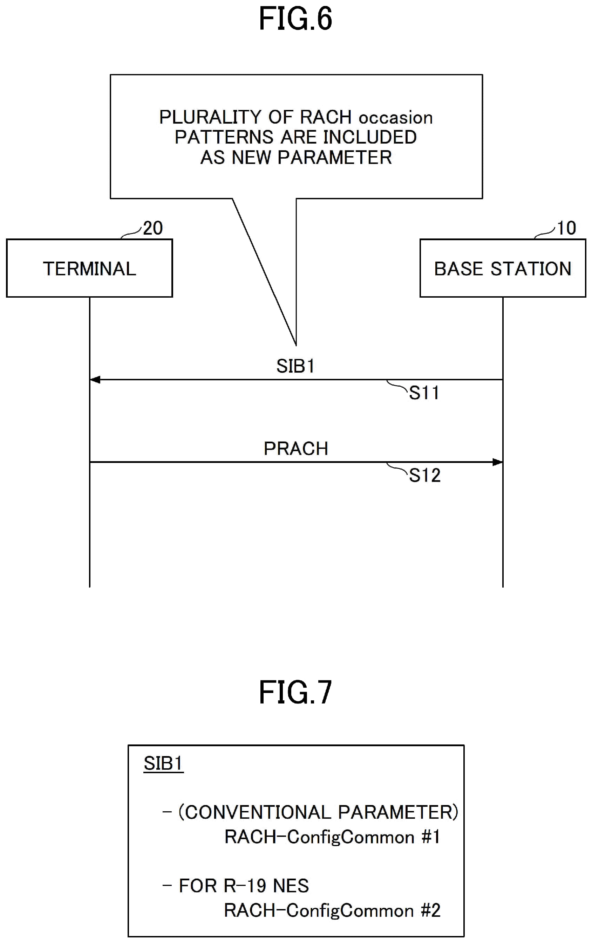

As illustrated in Fig. 6, in step S11, the base station 10 transmits SIB1 including a plurality of RO patterns. In step S12, the terminal 20 transmits PRACH to the base station 10.

In the first embodiment, in addition to the conventional RO configuration (for example, RACH-ConfigCommon/RACH-ConfigGeneric), a plurality of ROs may be configured for a terminal 20 that supports the subsequent releases of NES (for example, release 19 NES UE). In a case where a plurality of ROs are configured, the terminal 20 that supports the subsequent releases of NES may perform a predetermined operation by ignoring the conventional RO configuration and by only referring to the new ROs.

An identifier may be configured for each of the RO patterns. The RO pattern to be used may be determined by having an identifier indicated from the base station 10 to the terminal 20.

With respect to the identifier, an identifier (RO pattern ID) may be implicitly associated with an RO pattern by the order of lists configured by RRC. For example, as illustrated in Fig. 7, a predetermined number may be explicitly configured and an identifier may be associated with an RO pattern.

With respect to the plurality of RO patterns, a plurality of RO patterns that are configured for the terminal 20 may be controlled by configuring as "addmodlist" and/or "releaselist" by using RRC.

### (Second embodiment)

According to the second embodiment, a plurality of RO patterns may be configured as a plurality of sets, and an identifier may be configured for each of the sets. The set that is used by the terminal 20 may be identified by having an identifier used for identifying a set indicated from the base station 10 to the terminal 20. An RO pattern included in the set may be identified by configuring an identifier used for identifying an RO pattern included in the set.

### (Third embodiment)

According to the third embodiment, in addition to the conventional RO configuration (for example, RACH-ConfigCommon/RACH-ConfigGeneric), configuration in the time direction (cycle/periodicity, offset, duration) may be configured as the configuration contents for a pattern related to ROs (RO pattern). In the configuration contents for a pattern related to ROs, the time pattern indicating whether a configuration is activated or deactivated may be determined based on the configuration for RO patterns in the time direction. In the configuration in the time direction, the time unit may be any one of SFN (Subframe Number), radio frame, slot, symbol, s, ms, or subms.

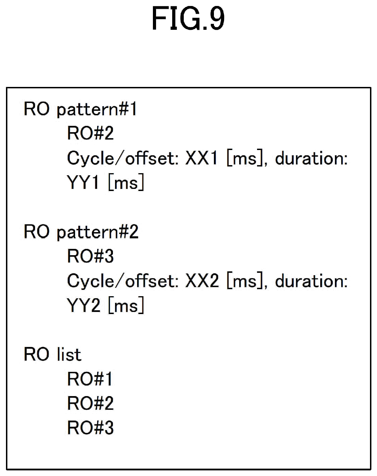

An RO pattern may include at least one of information for identifying an RO, a cycle to be used/offset, or a duration. For example, as illustrated in Fig. 9, RO pattern#1 includes RO#2 as information for identifying an RO, XX1 [ms] as a cycle/offset, and YY1 [ms] as a duration. RO pattern#2 includes RO#3 as information for identifying an RO, XX2 [ms] as a cycle/offset, and YY2 [ms] as a duration. RO#1 to RO#3 are included as ROs that are configurable for an RO list.

### (Fourth embodiment)

According to the fourth embodiment, with respect to the configuration contents of patterns related to ROs, the different period scaling and/or time offset may be used/configured for each RO pattern for the same prach-Configuration(Index) configured in the RO configuration (for example, RACH-ConfigCommon/RACH-ConfigGeneric).

The unit for the period scaling and/or time offset may be, for example, a radio frame, a slot, or a symbol.

The period scaling may be obtained by replacing "x" in "(n_f) mod (x) = y" specified in prach-Configuration with "x_pattern#X" that is configured for each RO pattern (RO pattern ID), or may be calculated by using multiplication (x may be calculated by x*x_RO pattern#X).

The time offset may be obtained by replacing "y" in "(n_f) mod (x) = y" specified in prach-Configuration with "y_RO pattern#X" that is configured for each RO pattern ID, or may be replaced with "y + Y_RO pattern#X" (may be calculated by using addition). The time offset may be obtained by replacing "subframe number and/or slot number" specified in prach-Configuration with "s_RO pattern#X" that is configured for each RO pattern ID, or may be replaced with "y + Y_RO pattern#X" (may be calculated by using addition).

In a case where at least one of a plurality of period scalings, time offsets, or RO pattern IDs is configured, RO pattern IDs and time offsets and/or RO pattern IDs may be associated with each other according to a predetermined rule.

### (Fifth embodiment)

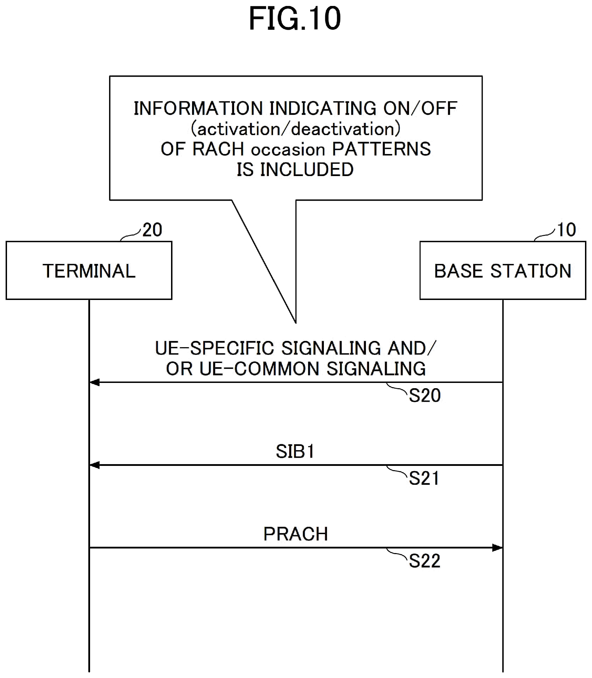

According to the fifth embodiment, ON/OFF (activation/deactivation) of each of the RO patterns may be indicated by UE-specific signaling and/or UE-common signaling. As illustrated in Fig. 10, in step 20, the base station 10 transmits, to the terminal 20, the UE-specific signaling and/or UE-common signaling including information indicating ON/OFF (activation/deactivation) of RO patterns. In step S21, the base station 10 transmits SIB1 including a plurality of RO patterns. In step S22, the terminal 20 transmits PRACH to the base station 10.

When the RO pattern is ON (activation), the time configuration associated with the RO pattern (period/offset/duration) may be used. When the RO pattern is OFF (deactivation), the time configuration (periodicity/offset/duration) associated with the RO pattern is not required to be used.

When the RO pattern is ON (activation), the (additionally configured/identifier-indicated/UE-selected) RO pattern may be used. When the RO pattern is OFF (deactivation), the conventional (release 15) RO configuration may be used without using the (additionally configured/identifier-indicated/UE-selected) RO pattern.

### (Sixth embodiment)

In a case where a plurality of RO patterns are configured, the RO pattern used by the terminal 20 may be determined based on at least one of: an RO pattern indicated by UE-specific signaling; an RO pattern indicated by UE-common signaling; an RO pattern that is randomly selected from a plurality of RO patterns indicated by UE-specific signaling and/or UE-common signaling; or an RO pattern that is selected from a plurality of RO patterns based on the identifier of the terminal 20 and/or predetermined information owned by the terminal 20.

For example, an identifier of the RO pattern may be indicated to the terminal 20 by using a parameter included in SIB1, an identifier of the RO pattern may be indicated by group-common DCI, an identifier of the RO pattern may be indicated by paging, or an identifier of the RO pattern may be indicated by DCI that triggers DCI based PRACH.

Presence or absence of a predetermined signal and/or a parameter indication may implicitly indicate activation of the RO pattern (RO pattern for NES/additionally configured RO pattern) without explicitly indicating an identifier of the RO pattern.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only proposed functions in one of the embodiments.

### <Base station 10>

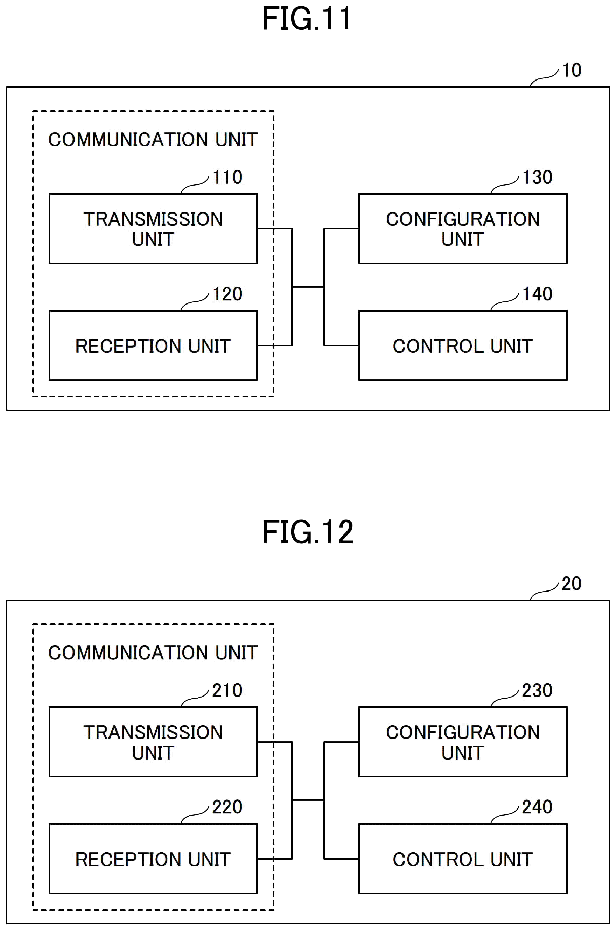

Fig. 11 is a drawing illustrating an example of a functional configuration of the base station. As shown in Fig. 11, the base station 10 includes a transmission unit 110, a reception unit 120, a configuration unit 130, and a control unit 140. The functional configuration illustrated in Fig. 11 is merely an example. Functional divisions and names of functional units may be any division and name as long as operations related to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, DL data, and the like to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 12 is a drawing illustrating an example of a functional configuration of the terminal. As shown in Fig. 12, the terminal 20 includes a transmission unit 210, a reception unit 220, a configuration unit 230, and a control unit 240. The functional configuration illustrated in Fig. 12 is merely an example. Functional divisions and names of functional units may be any division and name as long as operations related to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the transmission unit 210 transmits HARQ-ACK, and the reception unit 220 receives configuration information described in the embodiment(s).

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following items. In addition, a communication method described below may be performed.

### <Configuration related to an embodiment of the present invention>

### (First item)

A terminal including:
a reception unit configured to receive, from a base station, configuration information for configuring random access channel occasions used for random access channel transmission; and
a control unit configured to configure random access channel occasions based on the configuration information, wherein
the configuration information includes a plurality of random access channel occasion patterns, and
each of the plurality of random access channel occasion patterns includes at least one of: an identifier identifying a random access channel occasion; information indicating the number of synchronization signal blocks associated with the random access channel occasion; or information indicating the number of random access channel occasions allocated in a frequency domain.

### (Second item)

The terminal as described in the first item, wherein
the configuration information includes a plurality of random access channel occasion sets, and
each of the plurality of random access channel occasion sets includes a plurality of random access channel occasion patterns.

### (Third item)

The terminal as described in the first item, wherein
each of the plurality of random access channel occasion patterns further includes configuration of the random access channel occasion in a time direction, and
the configuration in the time direction includes at least one of: a period in which the random access channel occasions are configured; an offset; or duration.

### (Fourth item)

The terminal as described in the third item, wherein
the reception unit receives, from the base station, information indicating whether or not the configuration in the time direction is to be used.

### (Fifth item)

The terminal as described in the first item, wherein
at least one of different scaling or a different offset in the time direction is applied to each of the plurality of random access channel occasion patterns.

### (Sixth item)

A communication method performed by a terminal, the communication method including:
receiving, from a base station, configuration information for configuring random access channel occasions used for random access channel transmission; and
configuring random access channel occasions based on the configuration information, wherein
the configuration information includes a plurality of random access channel occasion patterns, and
each of the plurality of random access channel occasion patterns includes at least one of: an identifier identifying a random access channel occasion; information indicating the number of synchronization signal blocks associated with the random access channel occasion; or information indicating the number of random access channel occasions allocated in a frequency domain.

According to any one of the above-described configurations, the RO configuration can be configured appropriately by taking into account the dynamic adaptation of RACH occasions in the wireless communication system. According to the third item to the fifth item, the RO configuration can be flexibly performed in the time direction.

### (Hardware structure)

The block diagrams that have been used to describe the above embodiments (Fig. 11 and Fig. 12) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

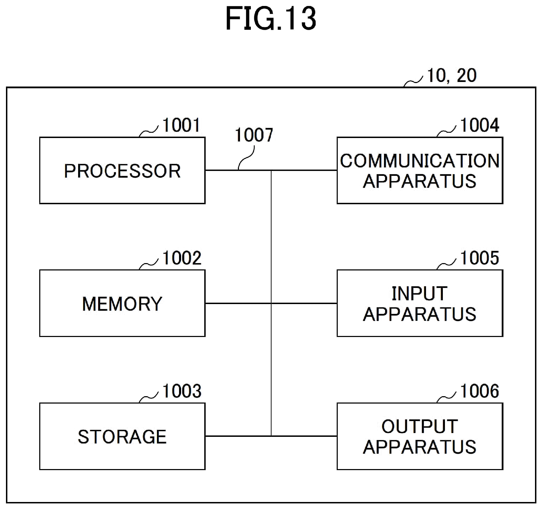

For example, the base station 10, the terminal 20, etc., according to an embodiment of the present disclosure may function as a computer for processing the radio communication method of the present disclosure. Fig. 13 is a drawing illustrating an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 14, control unit 240, or the like may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 11 may be implemented by control programs that are stored in the memory 1002 and that operate on the processor 1001. In addition, for example, the control unit 240 of the terminal 20 illustrated in Fig. 12 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

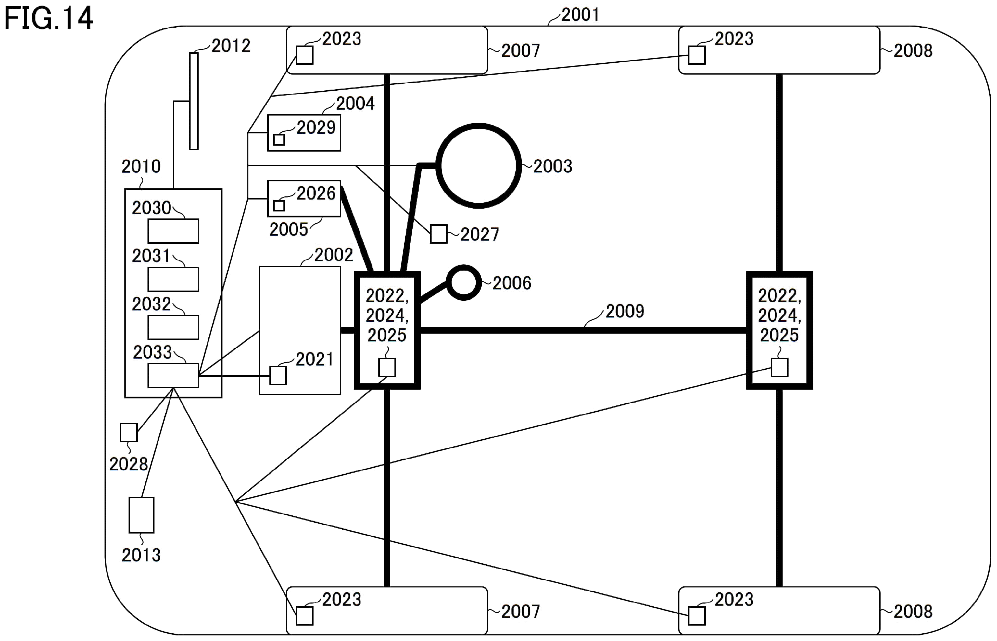

Fig. 14 shows an example of a configuration of a vehicle 2001. As shown in Fig. 14, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement of embodiment)

As described above, one or more embodiments have been described. The present invention is not limited to the above-described embodiments. A person skilled in the art should understand that there are various modifications, variations, alternatives, replacements, etc. of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; 5G, and the like) to be applied. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station or a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for a terminal 20.

At least one of configured BWPs may be active, and a terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive, from a base station, configuration information for configuring random access channel occasions used for random access channel transmission; and
a control unit configured to configure random access channel occasions based on the configuration information, wherein
the configuration information includes a plurality of random access channel occasion patterns, and
each of the plurality of random access channel occasion patterns includes at least one of: an identifier identifying a random access channel occasion; information indicating a number of synchronization signal blocks associated with the random access channel occasion; or information indicating a number of random access channel occasions allocated in a frequency domain.

2. The terminal as claimed in claim 1, wherein
the configuration information includes a plurality of random access channel occasion sets, and
each of the plurality of random access channel occasion sets includes a plurality of random access channel occasion patterns.

3. The terminal as claimed in claim 1, wherein
each of the plurality of random access channel occasion patterns further includes configuration of the random access channel occasion in a time direction, and
the configuration in the time direction includes at least one of: a period in which the random access channel occasions are configured; an offset; or duration.

4. The terminal as claimed in claim 3, wherein
the reception unit receives, from the base station, information indicating whether or not the configuration in the time direction is to be used.

5. The terminal as claimed in claim 1, wherein
at least one of different scaling or a different offset in the time direction is applied to each of the plurality of random access channel occasion patterns.

6. A communication method performed by a terminal, the communication method including:
receiving, from a base station, configuration information for configuring random access channel occasions used for random access channel transmission; and
configuring random access channel occasions based on the configuration information, wherein
the configuration information includes a plurality of random access channel occasion patterns, and
each of the plurality of random access channel occasion patterns includes at least one of: an identifier identifying a random access channel occasion; information indicating a number of synchronization signal blocks associated with the random access channel occasion; or information indicating a number of random access channel occasions allocated in a frequency domain.
